Europäisches Patentamt

(19) **European Patent Office**

**Office européen des brevets**

(11) Numéro de publication: **0 028 574**

**A1**

(12) ## DEMANDE DE BREVET EUROPEEN

(21) Numéro de dépôt: **80401584.0**

(22) Date de dépôt: **05.11.80**

(51) Int. Cl.³: **A 01 G 25/09**
**//B65H75/34**

(30) Priorité: **06.11.79 FR 7927303**

(43) Date de publication de la demande:
**13.05.81 Bulletin 81/19**

(84) Etats Contractants Désignés:
**AT BE CH DE GB IT LI LU NL SE**

(71) Demandeur: **Di Palma, Hugo Roland**
**Plat Bassin**
**F-47120 Duras(FR)**

(72) Inventeur: **Di Palma, Hugo Roland**
**Plat Bassin**
**F-47120 Duras(FR)**

(74) Mandataire: **Corre, Jacques Denis Paul et al,**
**Cabinet Regimbeau 26, Avenue Kléber**
**F-75116 Paris(FR)**

(54) **Appareil d'arrosage automatique à bobine porte-tuyau axial, et déplacement alterné.**

(57) L'invention concerne une machine d'arrosage.

Un chariot 1 muni de roues telles que 111 et 121 supporte une bobine axiale 3 sur laquelle vient s'enrouler un tuyau 31. Connecté par l'arbre de la bobine à une liaison 20 vers un dispositif d'arrosage, ce tuyau traverse également un dispositif de trancannage (40, 41) portant un bras articulé 44 capable d'une course symétrique autour de la verticale. Un dispositif de came 46 détecte la position du bras 44, et une logique de commande 90 agit en réponse à la détection faite par les cames pour commander l'enroulement ou le déroulement du tuyau.

Application notamment à l'irrigation de grandes surfaces.

EP 0 028 574 A1

./...

Croydon Printing Company Ltd.

FIG_3

## APPAREIL D'ARROSAGE AUTOMATIQUE A BOBINE PORTE-TUYAU AXIAL, ET DEPLACEMENT ALTERNE.

L'invention concerne l'irrigation, notamment sur de grandes surfaces.

On connaît déjà un appareil d'arrosage comprenant un châssis, mobile dans une direction générale définie par des roues, et supportant une bobine rotative formant magasin pour un tuyau destiné à être branché entre un poste externe d'alimentation, en eau généralement, et un dispositif d'arrosage lié à l'appareil. Sur de tels appareils, là où le tuyau sort de la bobine pour aller vers le poste d'alimentation, le chariot possède un dispositif dit de trancannage, qui assure l'enroulement du tuyau en couches régulières.

Des appareils de ce genre ont été récemment développés, dans lesquels l'axe de la bobine est parallèle à la direction de déplacement du chariot. Et il est ajouté au dispositif de trancannage un dispositif de guidage du tuyau qui peut pivoter autour d'un axe transversal à l'égard de la bobine, et commander la rotation de la bobine en fonction de sa propre position angulaire. Cet appareil possède un entraînement du chariot, capable de le déplacer à vitesse constante, ainsi qu'un entraînement de bobine, capable de faire enrouler le tuyau, à travers un embrayage, qui est commandé par le dispositif de guidage du tuyau précité.

Un tel appareil est amené auprès d'un poste d'eau, auquel son tuyau est branché. Il est ensuite tracté jusqu'à une certaine distance du poste d'eau, en laissant le tuyau se dérouler. L'arrosage se produit alors automatiquement lorsque l'appareil enroule le tuyau, en se dirigeant sur lui. On voit que l'opération d'arrosage se fait au coup par coup.

La présente invention vient proposer un appareil perfectionné, capable de fonctionner automatiquement et de manière périodique sur de longs intervalles de temps.

Dans l'appareil proposé, l'organe d'entraînement du chariot est susceptible d'une inversion de sens sur commande, le dispositif de guidage est mobile à pivotement sur une course sensiblement symétrique par rapport à la verticale, et il est associé à ce dispositif de guidage un dispositif de came capable de détecter son orientation par rapport à un seuil de part et d'autre de la verticale. Il est enfin prévu un dispositif de commande qui réagit au moins à cette détection faite par le dispositif de came en commandant le sens de rotation de la bobine.

Selon un autre aspect, important mais non limitatif, de l'invention, le dispositif de came comporte au moins deux zones sensibles aux fortes inclinaisons du tuyau sur la verticale, à peu près symétriques par rapport à celle-ci.

De préférence, le dispositif de came comporte une troisième zone sensible qui détecte la position à peu près verticale du tuyau, et le dispositif de commande est prévu pour réagir aux trois zones sensibles, ainsi qu'au sens de déplacement du chariot. Les deux premières zones sensibles produisent un déroulement du tuyau lorsque l'appareil s'éloigne du poste d'alimentation, ou un enroulement du tuyau lorsque l'appareil s'approche du poste d'alimentation. Et la commutation de la fonction de ces deux premières zones sensibles est définie par la troisième zone sensible, lorsque l'appareil passe au droit du poste d'alimentation, le tuyau se trouvant alors sensiblement vertical.

Très avantageusement, il est prévu une détection de fin de course de l'appareil, qui peut se faire en particulier à l'aide de butées placées sur le terrain, ou encore d'un capteur de déroulement complet du tuyau, monté sur la bobine. Le dispositif de commande réagit à cette détection de fin de course de l'appareil en inversant à la fois le sens de déplacement du chariot et le sens de rotation de la bobine.

Très avantageusement, le dispositif de came comporte deux zones sensibles supplémentaires, elles aussi à peu près symétriques sur la verticale, et qui détectent les très fortes inclinaisons du tuyau sur la verticale. Le dispositif de commande réagit alors à l'excitation de ces zones sensibles supplémentaires en commandant un arrêt de sécurité de l'appareil, qui intéresse à la fois le chariot et la bobine.

Dans un mode de réalisation particulier, l'appareil comporte un groupe électrogène embarqué, les organes d'entraînement du chariot et de la bobine étant des moteurs électriques, et le groupe électrogène fonctionnant à partir de l'énergie du fluide d'arrosage sous pression ou encore de l'énergie donnée par un moteur à combustion interne par exemple.

Dans une application particulièrement avantageuse, l'appareil selon l'invention est associé à au moins une ligne d'arrosage automotrice, qui s'étend transversalement à son trajet, et opère sur une grande surface en aller-retour.

D'autres caractéristiques et avantages de l'invention apparaîtront à la lecture de la description détaillée qui va suivre, faite en référence aux dessins annexés, donnés uniquement pour illustrer à titre non limitatif un mode de réalisation préférentiel de la présente invention, et sur lesquels :

- les figures 1 et 2 illustrent schématiquement les trajets suivis par l'appareil selon l'invention dans deux applications particulières d'arrosage ;

- la figure 3 est une vue latérale de l'appareil M des figures 1 et 2 ;

- la figure 4 est une vue en bout de l'appareil M des figures 1 et 2 ; et

- les figures 5A, 5B, 5C ainsi que 6 à 9 illustrent des profils de came utilisables dans l'appareil des figures 3 et 4.

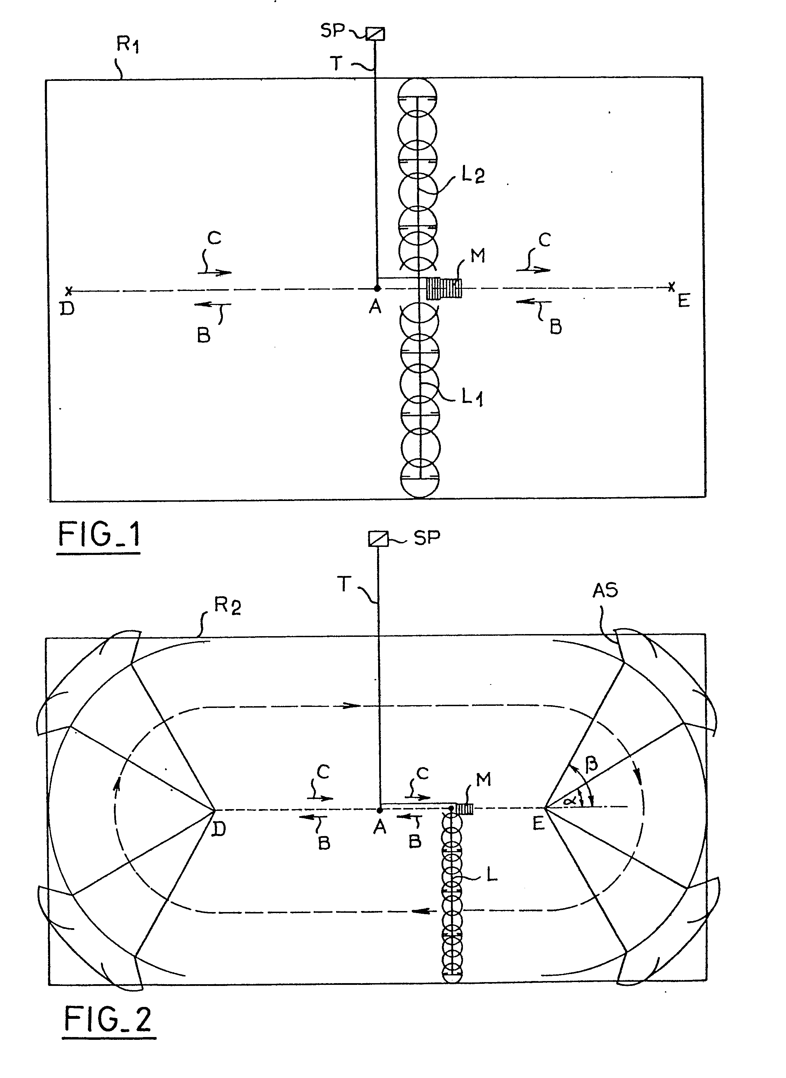

Sur les figures 1 et 2, on distingue en SP une station de pompage, susceptible de délivrer de l'eau sous pression à une canalisation enterrée T, qui aboutit à un poste d'eau A. Cette bouche d'eau A se trouve connectée à une certaine longueur de tuyau qui aboutit à un appareil selon l'invention M, lequel se déplace sur une trajectoire DE, en partant du point A lors de son branchement initial. Les flèches B et C illustrent le sens de mouvement de l'appareil. On reviendra plus loin sur les applications illustrées aux figures 1 et 2, après avoir considéré l'appareil M lui-même.

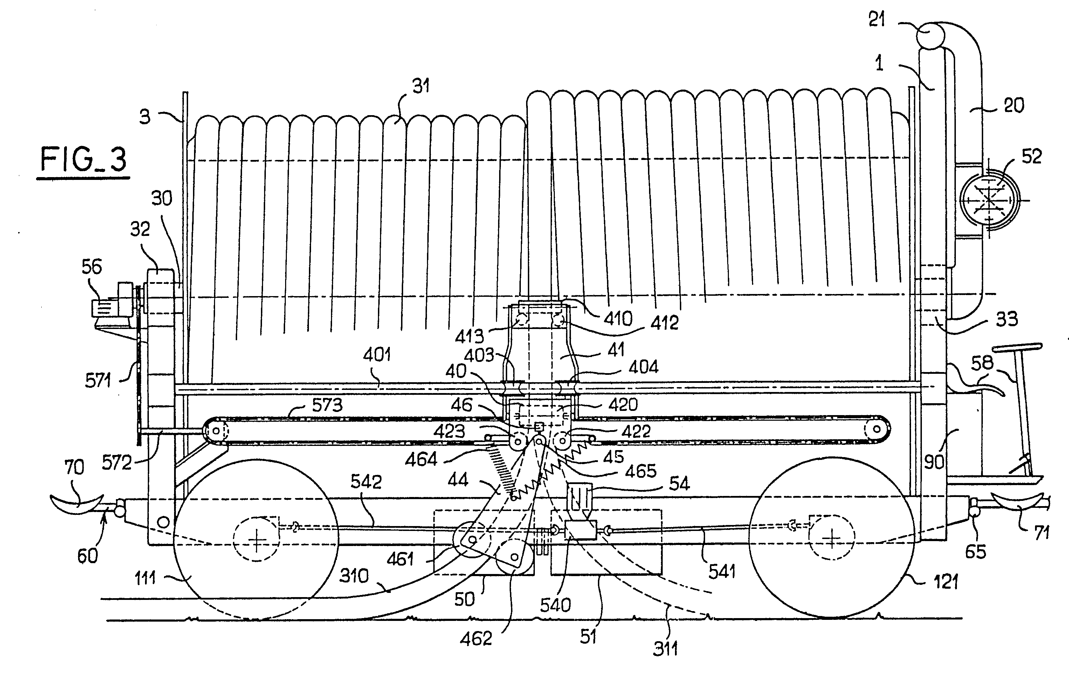

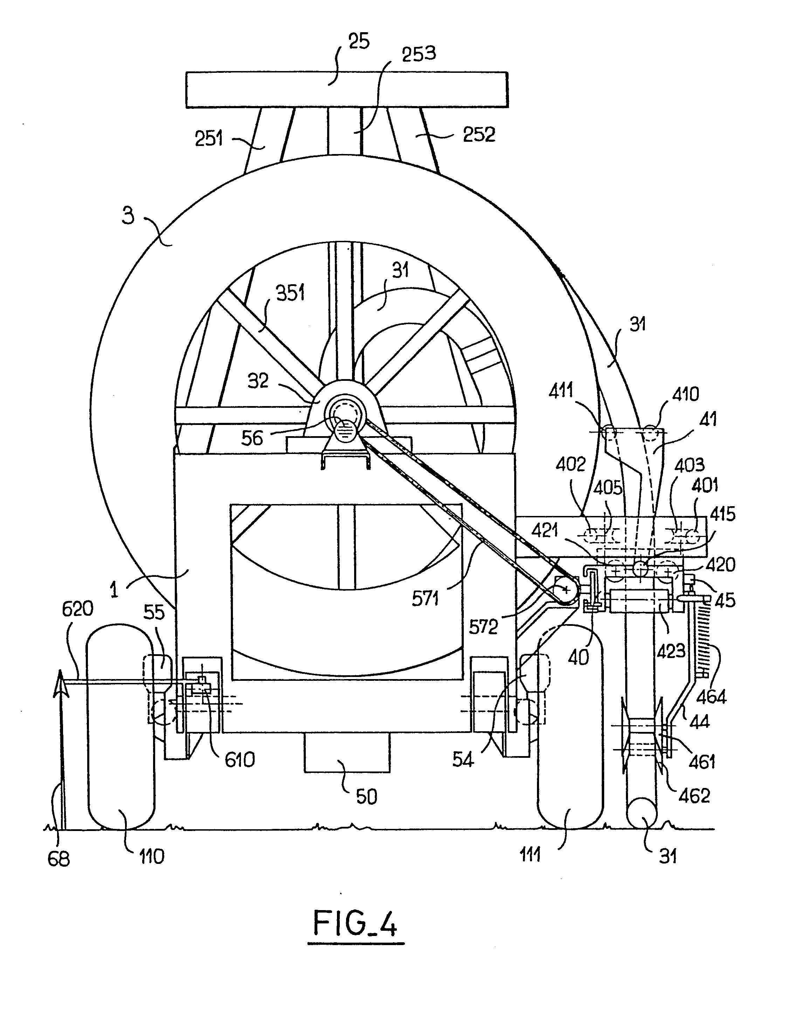

Sur les figures 3 et 4, cet appareil comporte un châssis 1, constitué d'une base et de deux montants d'extrémités, et qui supportent dans des paliers 32 et 33 l'arbre 30 d'une bobine 3 sur laquelle se trouve enroulé un tuyau 31. Le bout interne du tuyau est relié à l'arbre creux de la bobine, qui passe par le palier 33, pour aboutir à une tuyauterie 20, dont la sortie 21 est branchée à un dispositif d'arrosage qui peut être soit monté sur l'appareil lui-même, soit de préférence se déplacer solidairement avec lui, comme on le verra plus loin.

On note sur la canalisation 21 une turbine représentée en 52. Sous l'appareil, on voit également un moteur à combustion interne 50, qui commande une génératrice électrique 51. Cette illustration signifie que l'énergie nécessaire à l'appareil peut être prélevée soit par un moteur autonome incorporé à l'appareil, soit par la turbine utilisant l'énergie de l'eau sous pression. En pratique, dans la plupart des applications, il suffit d'utiliser une seule des sources d'énergie, moteur à combustion interne ou turbine, pour actionner le groupe électrogène 51.

Le châssis 1 se trouve ici supporté par quatre roues, 110 et 111 à un bout, et 120, 121 à l'autre. Les roues sont ici représentées en direction axiale fixe, et l'on observera qu'un moteur électrique 54 commande à travers un renvoi d'angle 540 les deux roues 111 et 121 situées d'un côté de l'appareil. Un autre moteur électrique 55 fait de même avec les deux roues 110 et 120 situées de l'autre côté. Bien entendu, pour certaines applications, on pourra prévoir des roues directrices, commandées par le poste de pilotage 58, notamment lorsque l'appareil comporte un moteur à combustion interne, et peut se déplacer sur route.

Un autre moteur électrique 56 actionne l'arbre 30 du tambour porte-tuyau 3. Le même moteur 56 actionne également par une chaîne 571, et un renvoi d'angle 572 une grande chaîne sans fin 573, qui va faire excursion sensiblement tout le long d'une génératrice du tambour 3. Cette grande chaîne 573 coopère de manière connue avec un chariot 40, soutenu par quatre galets 403, 404 (figure 3) ainsi que 405 (figure 4), le quatrième galet n'étant pas représenté. On voit mieux sur la figure 4 comment la chaîne horizontale vient entraîner le chariot de trancannage 40, par exemple à l'aide d'un doigt transversal éclipsable. On voit que le chariot de trancannage 40 suit une course longitudinale proportionnelle à la rotation du tuyau, ce qui lui permet d'assurer un enroulement régulier du tuyau en spire jointive.

Selon la présente invention, le chariot de trancannage 40 supporte des moyens de guidage du tuyau qui le prennent en sortie du tambour, et le guident suivant un trajet perpendiculaire à l'axe du tuyau. On voit ainsi que s'articule en partie supérieure du chariot 40, au point 415 (figure 4), un levier 41 qui pivote dans un plan vertical. Ce levier 41 porte en partie supérieure quatre rouleaux 410 et 411 (figure 4) ainsi que 412 et 413 (figure 3), qui prennent le tuyau juste au voisinage de la bobine. Le tuyau descend ensuite à travers le levier 41, pour atteindre le chariot de trancannage proprement dit 40, où il est à nouveau guidé par des galets 420 et 421 (figure 4), ainsi que 422 et 423 (figure 3). Les deux trains de galets qui viennent d'être décrits définissent une trajectoire verticale pour le tuyau à l'intérieur du dispositif de trancannage.

En partie basse du chariot de trancannage, il est prévu selon l'invention un levier 44 qui pivote en 45, l'axe de pivotement étant avantageusement perpendiculaire à l'axe de la bobine. Ce pivotement peut se faire sur une course symétrique, à l'encontre d'un rappel élastique également symétrique, défini par des ressorts 464 et 465 qui prennent appui d'un côté en commun sur le levier 44, et de l'autre sur des bras fixés au chariot de trancannage. En partie basse, le levier pivotant 44 comporte deux galets à périphérie concave 461 et 462, qui viennent ensserrer le tuyau 31, dont la portion 310 va finalement reposer sur le sol. On distingue en 311 une autre position possible pour le tuyau, illustrée en trait tireté, lorsque la machine se déplace de l'autre côté du point A des figures 1 et 2.

La partie haute du levier 44, au voisinage de son point d'articulation 45, possède des bossages ou autres moyens formant came, susceptibles de coopérer avec un suiveur de came 46, monté sur le chariot de trancannage.

Sur la figure 4, on distingue attachée à l'extrémité 610 d'un des longerons de la machine une barre transversale 620, susceptible de venir palper une butée 68 placée sur le terrain. Un dispositif analogue est avantageusement placé en 65, à l'autre bout de la machine (figure 3). Bien entendu, cette butée sur le terrain qui forme le détecteur de fin de course peut être remplacée par un palpeur sensible au fait qu'il ne reste plus de tuyau sur la bobine, ou par tout autre moyen, chronométrique par exemple, susceptible de définir des limites au mouvement aller-retour de l'appareil.

Enfin, en ce qui concerne le guidage de l'appareil sur le terrain, il est prévu ici des sabots d'extrémités 70 et 71, susceptibles de coopérer avec un câble métallique, lequel passe à travers l'appareil. Le guidage peut alors être réalisé de manière très simple en bloquant purement et simplement les roues d'un côté de l'appareil, par arrêt du moteur électrique correspondant, de manière à redresser celui-ci sur sa trajectoire, telle qu'elle est définie par le câble. Bien entendu, là encore, on peut concevoir de nombreuses variantes de l'invention, en particulier monter l'appareil sur rail, ou encore remplacer le câble de guidage mécanique 71 par un câble électrique enterré, ou par une liaison radio-électrique, notamment.

On s'intéressera maintenant à l'un des éléments les plus importants de l'invention, qui est la coopération entre le bras pivotant 44, à course symétrique autour de la verticale, et son dispositif lecteur de came 46.

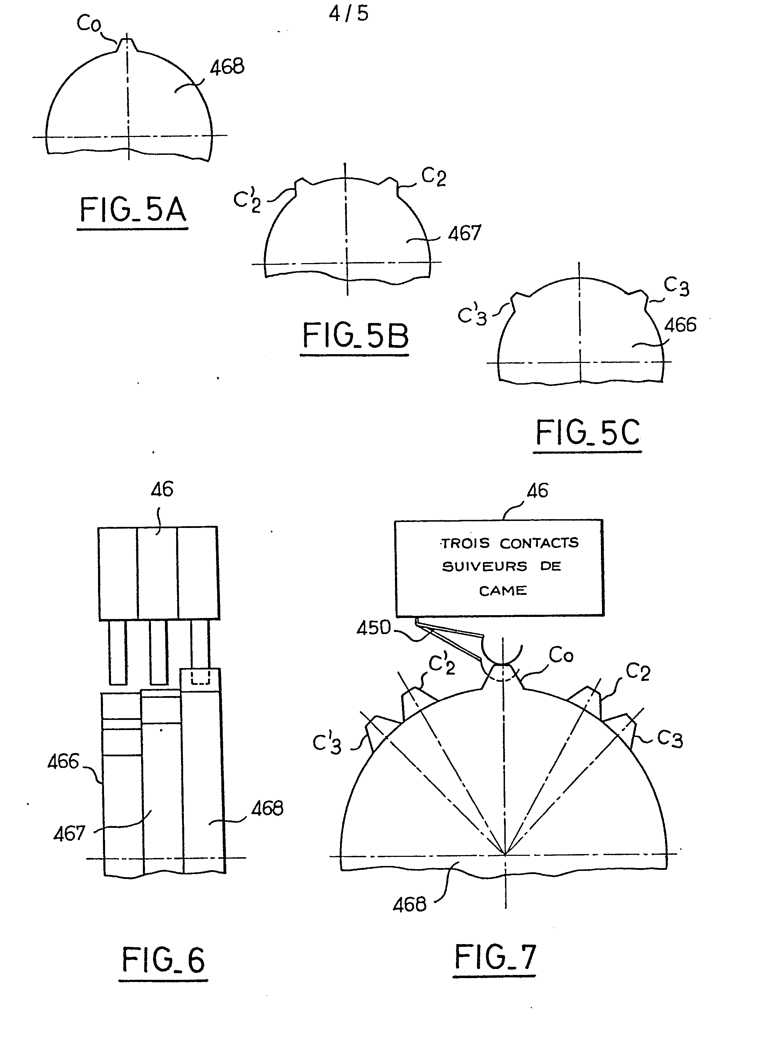

Le mode de réalisation actuellement préféré du dispositif came et lecteur de came est illustré sur les figures 5A à 5C, ainsi que 6 et 7.

La figure 6 illustre trois profils de came adjacents fixés l'un sur l'autre 466 et 468, qui sont rendus solidaires de l'extrémité supérieure du bras 44, au voisinage de son articulation 45. Ces profils de came 466 à 468 sont illustrés individuellement sur les figures 5A à 5C. L'axe vertical illustré sur ces figures est dirigé suivant l'axe de symétrie du bras 44, c'est-à-dire qu'il passe symétriquement entre les rouleaux 461 et 462. Le lecteur de came 46 comporte trois suiveurs qui palpent respectivement les profils 466 à 468, l'un de ces suiveurs 450 étant illustré sur la figure 7 en coopération avec le profil $C_0$ de la came 468.

Dans ce premier mode de réalisation, la came comporte deux zones $C_2$ et $C'_2$ sensibles aux fortes inclinaisons du tuyau sur la verticale, et à peu près symétriques par rapport à celles-ci (figure 5B). Il s'y ajoute une troisième zone sensible $C_0$ détectant la position à peu près verticale du tuyau (figure 5A). Enfin, il est également prévu deux zones sensibles supplémentaires $C_3$ et $C'_3$, qui détectent les très fortes inclinaisons du tuyau sur la verticale. On voit que les premières cames $C_2$ et $C'_2$ définissent un seuil d'inclinaison du dispositif de guidage de tuyau par rapport à la verticale, ce seuil étant symétrique. Et il est prévu selon l'invention un dispositif de commande disposé par exemple en 90 (figure 3), ce dispositif de commande réagissant au moins à la détection ainsi faite par le dispositif de came en commandant le sens de rotation de la bobine.

Le dispositif de came des figures 5 à 7 est prévu pour travailler avec deux butées de fin de course de l'appareil, dont la détection est transmise sous forme d'informations au dispositif de commande 90. On suppose également que la vitesse d'entraînement en rotation du tambour 3 par le moteur 56 est toujours légèrement trop forte, quelque soit l'état d'enroulement du tuyau. En d'autres termes, même lorsque le tuyau est presque complètement déroulé ou commence tout juste à s'enrouler, le moteur 56 fait tourner le tambour à une vitesse telle que le tuyau tend à s'enrouler ou à se dérouler plus vite que ne le nécessite le déplacement du chariot, commandé par les moteurs 54 et 55.

On fera maintenant référence aussi aux figures 1 et 2, et l'on admettra que l'appareil démarre du point A, vers le point D, donc dans le sens de la flèche B. Dès que l'appareil commence à avancer, le tuyau va tendre à prendre la position 311 de la figure 3. Le bras 44 va donc se trouver alors dans une position telle que très vite le profil de came $C_2$ va venir coopérer avec le lecteur de came 46. Dès que cette coopération est effective , la logique de commande 90 produit un déroulement du tuyau. Comme ce déroulement se fait à une vitesse excessive par rapport au déplacement de l'appareil, le bras 44 va redescendre légèrement, d'où arrêt du déroulement, après quoi le bras va à nouveau remonter, et produire à nouveau un déroulement, et ainsi de suite. Le bras 44 va donc osciller sur le côté inférieur du contact $C_2$ tout en assurant un déroulement satisfaisant du tuyau.

Arrivé en D, l'appareil reconnaît une fin de course (butée sur le terrain et/ou plus de tuyau) ; la logique de commande 90 inverse alors le sens d'entraînement de l'appareil par son chariot, de même que le sens de rotation de la bobine. Il suffit à cet effet d'une inversion de polarité sur les moteurs électriques. Les cames $C_2$ et $C'_2$ vont donc maintenant produire un enroulement du tuyau. Au point D, l'appareil était en pleine traction sur le tube, contact $C_2$ excité (s'il ne l'était pas, on peut utiliser le signal de fin de course comme équivalent de $C_2$). Au retour de D vers A, le contact $C_2$ excité produit l'enroulement du tuyau, d'où remontée du bras 44, désexcitation du contact $C_2$, redescente du bras 44 qui excite à nouveau le contact $C_2$, d'où remontée du bras 44, et ainsi de suite, ce bras oscillant sur le côté supérieur du contact $C_2$.

Au passage au point A, le tube passe à la verticale sur le contact $C_0$, qui inverse le sens de rotation de la bobine, sans changer le déplacement du chariot. De A vers E, on retrouve le même fonctionnement que de A à D, mais avec $C_2$ pour le déroulement. De même, après commutation en bout de course E, on retrouve de E vers A un enroulement commandé par $C'_2$.

Des contacts de sécurité $C_3$ et $C'_3$ sont prévus pour produire l'arrêt complet de la machine si la tension du tuyau devenait excessive (pas assez de déroulement ou trop d'enroulement).

Trop de déroulement, dans le trajet de A vers D par exemple, produirait une boucle de tuyau qui passe à la verticale de l'appareil puis de l'autre côté. En ce cas, le passage en $C_0$ commute à l'enroulement, et, s'il fonctionne, le moteur de bobine va enrouler jusqu'à repassage en $C_0$, et retour au déroulement normal sur $C_2$. Si le moteur de bobine est en défaut, la came $C'_3$ produit l'arrêt de sécurité. En revanche, pas assez d'enroulement ne serait pas corrigé automatiquement par les cames ci-dessus. Cela n'a que peu d'importance, car, en fait, de tels troubles ne peuvent être produits que par des pannes -extrêmement rares- des moteurs de chariot ou de bobine, ce qui nécessite l'arrêt de sécurité en $C_3$ ou $C'_3$. Avantageusement, la logique de commande inhibe le contact $C'_2$ lorsque c'est $C_2$ qui doit détecter, et inversement, d'après une mémorisation à un bit des passages en A, compte-tenu du sens de tirage initial du tuyau. De même, on peut prévoir que le contact $C_0$ joue le rôle de sécurité tant que l'appareil a enregistré un passage en A sans avoir encore reçu l'information de fin de course en D ou E.

Bien entendu, on peut prévoir différentes variantes de cames, sans s'écarter pour autant de l'invention.

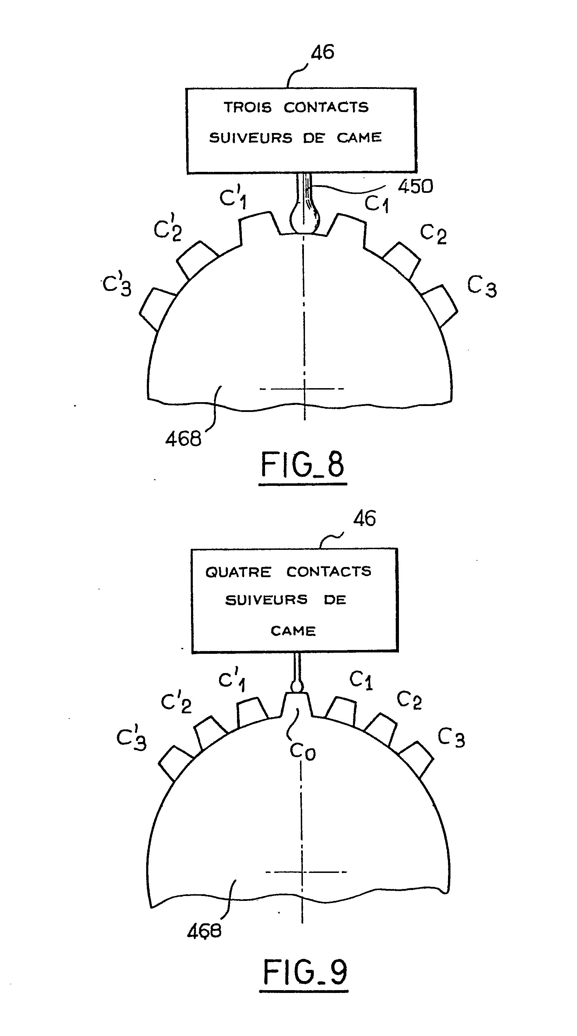

Sur la figure 8, on voit trois paires de cames contacts $C_1$ et $C'_1$, $C_2$ et $C'_2$, ainsi que $C_3$ et $C'_3$, situées naturellement dans des plans différents. $C_3$ et $C'_3$ demeurent affectées à la sécurité. Maintenant $C_2$ et $C'_2$ assurent un déroulement, $C_1$ et $C'_1$ un enroulement, quelle que soit la situation du chariot, la fin de course ne commutant que le sens de mouvement du chariot. L'angle de seuil se situe donc ici dans le bref intervalle entre $C_1$ et $C_2$, au lieu d'être défini par $C_2$ comme précédemment. Et, quel que soit le trajet de l'appareil, le bras 44 oscille entre la position neutre entre $C_1$ et $C_2$, l'enroulement en $C_1$, et le déroulement en $C_2$. Là encore, lorsque l'appareil doit répondre aux cames-contacts $C_1$ et $C_2$, on peut inhiber dans la logique de commande les autres cames $C'_1$ et $C'_2$, et inversement. Pour éviter une tension excessive du tuyau lors du passage en A, on peut surveiller le fait que $C_1$ et $C'_1$ sont excités consécutivement sans intervention de $C_2$ ou $C'_2$ entre temps, et dans ce cas inhiber l'intervention du second excité parmi $C_1$ et $C'_1$.

Au lieu de surveiller l'excitation consécutive de $C_1$ et $C'_1$, on peut utiliser une came de verticale $C_0$. Le dispositif 468 comporte alors quatre plans de came, lus par quatre suiveurs, donc quatre contacts, 46. Cela est illustré sur la figure 9. On sait alors, simplement, d'après les passages en $C_0$, quand et comment effectuer les inhibitions décrites ci-dessus.

La logique de commande peut tenir compte aussi du fait qu'elle a dernièrement enregistré une fin de course, et privilégier l'enroulement, ou un passage en A, et privilégier le déroulement. Le privilège peut se matérialiser dans le cas des figures 8 et 9 par le fait que la durée d'excitation du moteur de bobine est plus longue pour l'une des deux paires de contacts ($C_1$, $C'_1$ ; $C_2$, $C'_2$). Enfin, la logique 90 comportera avantageusement un moyen compte-temps, pour interdire certaines opérations hors de certains intervalles de temps compte-tenu de la vitesse moyenne de l'appareil, par exemple inhiber l'ordre de fin de course tant que l'appareil ne peut avoir atteint D compte-tenu de sa vitesse, ou encore inhiber la détection de passage en A. En particulier dans le cas d'un guidage radioélectrique, le point A peut être marqué par un signal spécial, analogue aux butées de fin de course.

Bien entendu, l'appareil selon l'invention est susceptible de nombreuses variantes : au lieu d'utiliser l'énergie de l'eau ou d'un moteur à combustion interne pour produire de l'électricité à bord, on peut relier l'appareil à une source d'électricité fixe, soit par câble auto-enrouleur, soit par une caténaire ou analogue. Par ailleurs, au lieu que l'énergie motrice de bord soit l'électricité, la turbine ou le moteur à combustion interne peut actionner une centrale hydraulique, et les moteurs 54, 55 et 56 sont alors hydrauliques eux aussi.

On reviendra maintenant aux figures 1 et 2 pour décrire deux applications de l'invention. Sur la figure 1, les références $L_1$ et $L_2$ désignent deux lignes d'arrosage auto-motrices, liées à l'appareil M, et alimentées en eau par son orifice 21 (figure 3). En suivant, de manière asservie par exemple, l'appareil M, qui les alimente en eau en permanence, les lignes $L_1$ et $L_2$ arrosent en continu le grand rectangle.

Sur la figure 2 est prévue une seule ligne d'arrosage L qui décrit une trajectoire de forme générale définie par un rectangle dont les deux petits côtés sont remplacés par deux demi-cercles. Bien entendu, il est prévu un arrêt de l'appareil M aux fins de course D et E, par exemple pendant un temps prédéterminé et/ou suivant une détection de l'angle entre la ligne d'arrosage L et l'axe de l'appareil M (pour attendre la perpendicularité). En utilisant une détection d'angle plus élaborée, on peut mettre en oeuvre, entre les angles $\alpha$ et $\beta$ , un arroseur supplémentaire placé à l'extrémité libre de la ligne L, pour mieux couvrir les coins du rectangle $R_2$ (figure 2).

On voit que l'appareil selon l'invention résoud élégamment le problème d'alimenter en continu une ou plusieurs lignes d'arrosage tout en leur permettant un mouvement alterné permanent, à vitesse uniforme.

REVENDICATIONS

1) Appareil d'arrosage, du type comprenant un châssis mobile dans une direction générale définie par des roues, et supportant une bobine rotative, d'axe parallèle au déplacement du chariot, formant magasin pour un tuyau destiné à être branché entre un poste externe d'alimentation et un dispositif d'arrosage lié à l'appareil, dans lequel, là où le tuyau sort de la bobine, le chariot possède un dispositif de trancannage qui assure l'enroulement du tuyau en couches régulières, ainsi qu'un dispositif de guidage de tuyau qui peut pivoter autour d'un axe transversal à l'égard de la bobine et commander la rotation de la bobine en fonction de sa position angulaire, en agissant sur un organe d'entraînement de la bobine, tandis qu'il est prévu par ailleurs un organe d'entraînement du chariot capable d'entraîner le chariot à vitesse sensiblement constante, caractérisé par le fait que l'organe d'entraînement du chariot est susceptible d'une inversion de sens sur commande, que le dispositif de guidage est mobile à pivotement sur une course sensiblement symétrique par rapport à la verticale, qu'il est associé à ce dispositif de guidage un dispositif de came capable de détecter son orientation par rapport à un seuil de part et d'autre de la verticale, et qu'il est prévu un dispositif de commande qui réagit au moins à la détection faite par le dispositif de came en commandant le sens de rotation de la bobine.

2) Appareil d'arrosage selon la revendication 1, caractérisé par le fait que le dispositif de came comporte au moins deux zones sensibles aux fortes inclinaisons du tuyau sur la verticale, à peu près symétriques par rapport à celle-ci.

3) Appareil d'arrosage selon la revendication 2, caractérisé par le fait que le dispositif de came comporte une troisième zone sensible détectant la position à peu près verticale du tuyau, et que le dispositif de commande réagit aux trois zones sensibles ainsi qu'au sens de déplacement du chariot, les deux premières zones sensibles produisant un déroulement du tuyau lorsque l'appareil s'éloigne du poste d'alimentation, ou un enroulement du tuyau lorsque l'appareil s'approche du poste d'alimentation, et la commutation de leur fonction étant définie par la troisième zone sensible lorsque l'appareil passe au droit du poste d'alimentation.

4) Appareil d'arrosage selon l'une des revendications 2 et 3, caractérisé par le fait qu'il est prévu une détection de fin de course de l'appareil, en particulier à l'aide de butées placées sur le terrain ou d'un capteur de déroulement complet du tuyau, et que le dispositif de commande réagit à cette détection de fin de course en inversant à la fois le sens de déplacement du chariot et le sens de rotation de la bobine.

5) Appareil d'arrosage selon l'une des revendications 2 à 4, caractérisé par le fait que le dispositif de came comporte deux zones sensibles supplémentaires, à peu près symétriques sur la verticale, et qui détectent les très fortes inclinaisons du tuyau sur la verticale, et que le dispositif de commande réagit à l'excitation de ces zones sensibles supplémentaires en commandant un arrêt de sécurité de l'appareil, qui intéresse à la fois le chariot et la bobine.

6) Appareil d'arrosage selon l'une des revendications 2 à 5, caractérisé par le fait que le dispositif de came comporte encore deux autres zones sensibles qui détectent de faibles inclinaisons du tuyau sur la verticale, et que le dispositif de commande répond aux contacts associés à ces deux zones sensibles en commandant un enroulement du tuyau, alors qu'il répond aux deux premières zones sensibles, associées à de plus fortes inclinaisons du tuyau, en commandant un déroulement du tuyau.

7) Appareil d'arrosage selon l'une des revendications 1 à 6, caractérisé par le fait que l'appareil comporte un groupe électrogène embarqué, les organes d'entraînement du chariot et de la bobine étant des moteurs électriques, et le groupe électrogène fonctionnant à partir de l'énergie du fluide d'arrosage sous pression ou d'un moteur à combustion interne.

8) Appareil d'arrosage selon la revendication 7, caractérisé par le fait qu'il est associé à au moins une ligne d'arrosage automotrice opérant sur une grande surface en aller-retour.

FIG_1

FIG_2

FIG_3

0028574

FIG_4

FIG_5A

FIG_5B

FIG_5C

FIG_6

TROIS CONTACTS SUIVEURS DE CAME

FIG_7

46

| TROIS CONTACTS |
| SUIVEURS DE CAME |

$C'_1$     450

$C'_2$       $C_1$

$C'_3$        $C_2$

         $C_3$

468

## FIG_8

46

| QUATRE CONTACTS |
| SUIVEURS DE |
| CAME |

$C'_1$      $C_1$

$C'_2$        $C_2$

$C'_3$        $C_3$

$C_0$

468

## FIG_9

Office européen
des brevets

**RAPPORT DE RECHERCHE EUROPEENNE**

Numéro de la demande

EP 80 40 1584

| | **DOCUMENTS CONSIDERES COMME PERTINENTS** | | | **CLASSEMENT DE LA DEMANDE (Int. Cl. 3)** |
|---|---|---|---|---|
| Catégorie | Citation du document avec indication, en cas de besoin, des parties pertinentes | Revendication concernée | | |
| | DE - C - 839 817 (DOPP)<br>* Page 2, ligne 113 - page 3, ligne 76; figures 1,2 *<br><br>-- | 1 | | A 01 G 25/09//<br>B 65 H 75/34 |
| | FR - A - 976 968 (UNION D'ELEC-TRICITE)<br>* Page 1, colonne de droite, dernier paragraphe - page 2, colonne de droite, 3ème paragraphe; figures 1,2,3 *<br><br>-- | 1,4 | | |
| | FR - A - 2 269 856 (IRRIFRANCE)<br>* Revendication 1 *<br><br>-- | 7 | | **DOMAINES TECHNIQUES RECHERCHES (Int. Cl. 3)**<br><br>A 01 G 25/09<br>B 65 H 75/34<br>75/36 |
| | FR - A - 2 164 858 (WRIGHT RAIN)<br>* Revendications 1-5 *<br><br>-- | 4 | | |
| A | FR - A - 2 113 406 (PERROT-REG-NERBAU)<br>* Page 2, ligne 21 - page 6, ligne 12; figures 1-4 *<br><br>---- | 1 | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | | | | &: membre de la même famille, document correspondant |

| | Le présent rapport de recherche a été établi pour toutes les revendications | | |
|---|---|---|---|
| Lieu de la recherche<br>La Haye | Date d'achèvement de la recherche<br>10-02-1981 | Examinateur<br>HERYGERS | |